# EUROPEAN PATENT SPECIFICATION

(11) **EP 3 815 891 B1**
(45) Date of publication and mention of the grant of the patent: **17.05.2023**
(21) Application number: 20202845.2
(22) Date of filing: 20.10.2020
(51) Int. Cl.: B29D 30/38, B29C 48/03, B29C 48/00, B29C 48/05, B29C 48/07, B29C 48/156, B29C 48/285, B29C 48/34, B29L 30/00

(54) **A DIE FOR A POLYMER MIXING OR PLY MANUFACTURING MACHINE, A CORDURARY OR THROATED PLY AND ITS USE, A METHOD OF MANUFACTURING SUCH A PLY AND A TIRE COMPRISING SUCH A PLY**
MATRIZE FÜR EINE POLYMERMISCH- ODER LAGENHERSTELLUNGSMASCHINE, KORD- ODER KEHLLAGE UND IHRE VERWENDUNG, VERFAHREN ZUR HERSTELLUNG EINER SOLCHEN LAGE UND REIFEN MIT EINER SOLCHEN LAGE
MOULE POUR UNE MACHINE DE FABRICATION DE PLI OU DE MÉLANGE DE POLYMÈRES, PLI CORDURAIRE OU À GORGE ET SON UTILISATION, PROCÉDÉ DE FABRICATION D'UN TEL PLI ET PNEU COMPRENANT UN TEL PLI

(30) Priority: 30.10.2019 US 201916668548; 10.06.2020 US 202016897358
(43) Date of publication of application: 05.05.2021
(73) Proprietor: The Goodyear Tire & Rubber Company, Akron, OH 44316 (US)
(72) Inventor: KMIECIK, Frank Anthony, Akron, OH 44313 (US); ELCHERT, Alex James, Akron, Stow 44224 (US); CAPPELLI, Matthew Ray, Canal Fulton, 44614 (US); PFEIFFER, Christopher Daniel, Akron, 44333 (US); YAO, Minwu, Stow, OH 44224 (US)
(74) Representative: Kutsch, Bernd

(56) References cited:
- WO-A1-03/061953
- GB-A- 1 440 081
- JP-A- 2006 248 023

## Description

### Field of the Invention

The present invention generally relates to extruding a ply capable of enhancing performance of pneumatic or non-pneumatic tires, to a die for a polymer mixing or ply manufacturing machine, to a cordurary or throated ply and its use in a tire, to a method of manufacturing such a ply, and to a tire comprising such a ply

### Background of the Invention

A ply may conventionally be used for various rubber products, such as tires. The ply may be formed by a polymer mixing or ply manufacturing machine using die in such a manner that cords are be arranged in an array and coated with a topping rubber. The ply may thus be a thin array of rubber covered or coated cords.

GB 1 44 081 A, WO 03/061953 A1 and JP 2006 248 023 A each describe a ply in accordance with a preamble of claim and a method of making such a ply.

### Summary of the Invention

The invention relates to a ply in accordance with claim 1, to a tire component in accordance with claim 3, to a method of making a ply in accordance with claim 4 and to a tire in accordance with claim 5.

Dependent claims refer to preferred embodiments of the invention.

In a preferred embodiment, a die for a polymer mixing or a ply manufacturing machine includes first and second opposing surfaces, each defining first cylindrical portions and second substantially V-shaped portions interspaced between each first portion, the first and second opposing surfaces producing a ply with first portions thicker than second portions and thus throated portions between said first portions.

According to a preferred embodiment of the die, each first portion joins with an adjacent second portion forming a linear conjunction.

According to a preferred embodiment of the die, each second portion is defined by a midpoint between two cords of a ply on one lateral side of one cord and a midpoint between two cords on the opposite lateral side of the one cord.

According to a preferred embodiment of the die, the first and second opposing surfaces each have an inverse corduroy appearance.

According to a preferred embodiment of the die, each opposing surface has at least one concave cylindrical surface.

According to a preferred embodiment of the die, each opposing surface has at least one concave cylindrical surface joining another adjacent concave cylindrical surface thereby forming a linear conjunction therebetween.

According to a preferred embodiment of the die, each second portion is defined by a midpoint between two cords of a ply on one lateral side of one cord and a midpoint between two cords on the opposite lateral side of the one cord.

The die may be used to produce a tire in accordance with the present invention preferably having a pair of axially spaced apart annular bead cores, a carcass ply extending around both bead cores, a tread for engaging a contact surface and being disposed radially outward of the carcass ply, and a belt structure disposed radially between the carcass ply and the tread. The carcass ply includes a plurality of cords embedded in a polymer matrix.

In a preferred embodiment, the carcass ply has a first radially upper surface and a second radially lower surface disposed opposite the first surface. The first surface defines first portions and second portions interspaced between each first portion. Each first portion has a thickness greater than each second portion thereby forming throated portions between each cord of the plurality of cords.

According to a preferred embodiment of the tire, each first portion joins with an adjacent second portion forming a linear conjunction.

According to a preferred embodiment of the tire, each second portion is defined by a midpoint between two cords on one lateral side of a cord and a midpoint between two cords on the opposite lateral side of the cord.

According to a preferred embodiment of the tire, the first surface has a corduroy appearance.

According to a preferred embodiment of the tire, the second surface has second cylindrical portions with each of the second cylindrical portions being partially concentric with a cylindrical outer surface of an adjacent cord.

According to a preferred embodiment of the tire, each second cylindrical portion joins with an adjacent second cylindrical portion forming a linear conjunction.

According to a preferred embodiment of the tire, each second cylindrical portion is defined by a midpoint between two cords on one lateral side of a cord and a midpoint between two cords on the opposite lateral side of the cord.

According to a preferred embodiment of the tire, the second surface has a corduroy appearance.

According to a preferred embodiment of the tire, the belt structure has a first radially upper belt surface and a second radially lower belt surface disposed opposite the first belt surface, the first belt surface having first belt cylindrical portions with each of the first belt cylindrical portions being partially concentric with a cylindrical outer surface of an adjacent belt cord.

According to a preferred embodiment of the tire, the first belt surface has a corduroy appearance.

A method in accordance with the present invention produces a corduroy or throated ply.

The method includes the steps of: concentrically attaching a first topping rubber to a periphery of each of a plurality of cords; forming an array of cords coated with the first topping rubber; concentrically attaching a second topping rubber to a periphery of each of the plurality of cords; and forming a cord ply having a corduroy first surface and a corduroy second surface opposite the first corduroy surface.

According to a preferred embodiment of the method, a further step includes modifying a first planar surface and a second planar surface.

According to a preferred embodiment of the method, a further step includes removing rubber from a first planar surface of the cord ply and a second planar surface of the cord ply.

According to a preferred embodiment of the method, a further step includes calendering the first topping rubber and the second topping rubber.

According to a preferred embodiment of the method, a further step includes removing throat material between each cord of the plurality of cords.

According to a preferred embodiment of the method, pressure of the first topping rubber in a topping chamber is 5,000 kPa or higher.

According to a preferred embodiment of the method, pressure of the second topping rubber in the topping chamber is 5,000 kPa or higher.

According to a preferred embodiment of the method, a time interval between the attaching steps is 10 minutes or less.

According to a preferred embodiment of the method, the first topping rubber has the same rubber composite as that of the second topping rubber.

According to a preferred embodiment of the method, the first topping rubber has a rubber composite with greater complex elastic modulus than that of the second topping rubber.

According to a preferred embodiment of the method, the method further includes the step of modifying a first planar surface and a second planar surface.

According to a preferred embodiment of the method, the method further includes the step of removing rubber from a first planar surface of the cord ply and a second planar surface of the cord ply.

According to a preferred embodiment of the method, the method further includes the step of calendering the first topping rubber and the second topping rubber.

According to a preferred embodiment of the method, the method further includes the step of removing throat material between each cord of the plurality of cords.

### Definitions

As used herein and in the claims:
"Axial" and "axially" refer to lines or directions that are parallel to the axis of rotation of the tire.
"Circumferential" and "circumferentially" mean lines or directions extending along the perimeter of the surface of the annular tire parallel to the equatorial plane (EP) and perpendicular to the axial direction.
"Corduroy" means a surface composed of linear tufts (such as portions 21) and channels/throats between the tufts. The surface may look as if it is made from multiple cords or filaments laid parallel to each other.
"Denier" means the weight in grams per 9000 meters (unit for expressing linear density).
"Dtex" means the weight in grams per 10,000 meters.
"Density" means weight per unit length.
"Equatorial plane (EP)" means the plane perpendicular to the tire's axis of rotation and passing through the center of its tread; or the plane containing the circumferential centerline of the tread.
"Filament count" means the number of filaments that make up a yarn. Example: 1000 denier polyester has approximately 190 filaments.
"Gauge" refers generally to a measurement, and specifically to a thickness measurement.
"Ply" means a cord or filament reinforced layer of rubber-coated cords or filaments, preferably radially deployed or otherwise parallel cords.
"Radial" and "radially" mean directions radially toward or away from the axis of rotation of the tire.

### Brief Description of the Drawings

The present invention will be described by way of example and with reference to the accompanying drawings, in which:
FIG. 1 schematically shows an example apparatus for producing a ply in accordance with the present invention;
FIG. 2 schematically shows an enlarged perspective view of part of the example apparatus of FIG. 1;
FIG. 3 schematically shows a cross-section construction of an example ply in accordance with the present invention; and
FIG. 4 schematically shows a perspective view of an example die in accordance with the present invention.

### Detailed Description of Example Embodiments of the Present Invention

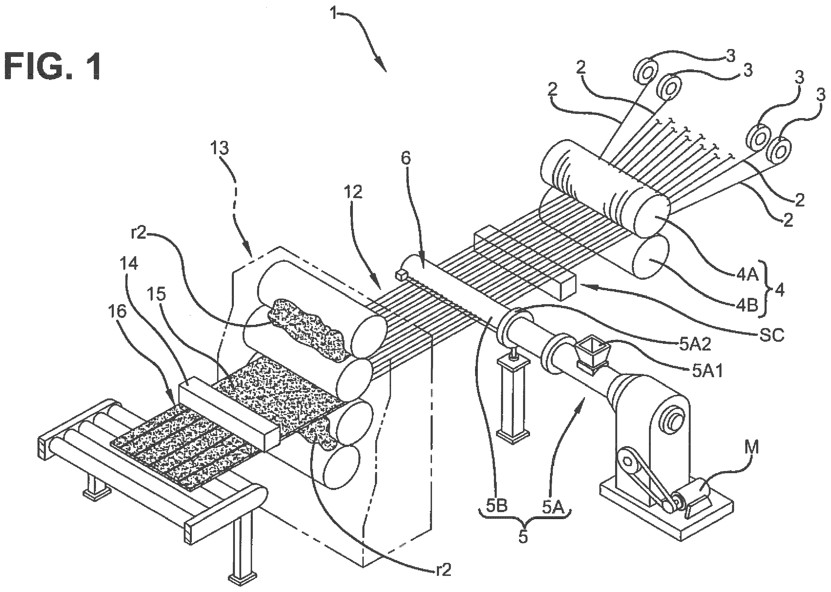

FIG. 1 shows an example apparatus 1 for producing a ply in accordance with the present invention. The ply may be used in any structure of a tire, such as carcass, belt, overlay, flipper, chipper, etc. This apparatus 1 is only one example and the apparatus may not be limited to the specific structure of FIGS. 1-2. In the described embodiment, cords 2 are pulled out from spools 3 arranged in parallel to each other and supplied to a first topping apparatus 5. A suitable structure for the cords 2 is not limited, and the structure may be selected in accordance with the ply, such as 1x5, 1x4, 1x3, 2+2, 2+3 or monofilament. Although the cords 2 are shown as monofilaments in FIGS. 1-3, a stranded cord comprising a plurality of strands/filaments may alternatively be used. The cords 2 may be constructed of steel, carbon fiber, resin, rayon, aramid, glass fiber, rayon, and/or other suitable material.

When the cords 2 pass through an arranging roll 4, the cords 2 are substantially in parallel to each other. The arranging roll 4 may include rotatable roll bodies 4A, 4B which sandwich the cords 2 from above and below. In the example shown, an outer peripheral surface of at least one of the roll bodies may be formed with a guide groove into which a portion of the cords 2 may be fitted. The guide groove may be formed in the circumferential direction of the roll bodies 4A, 4B. Thus, a plurality of the cords 2 is discharge from the arranging roll 4 smoothly and without resistance. Alternatively, a comb-like body with slit-like guide hole may be provided instead of the roll 4.

In the example of FIGS. 1-2, the first topping apparatus 5 includes a small rubber extruding portion 5A and a rubber attaching tool 5B mounted on a tip end of the rubber extruding portion. The rubber extruding portion 5A may include an input port 5A1 into which material of first topping rubber is supplied and an extruding port 5A2 from which kneaded and plasticized first topping rubber is discharged to the cords 2. The rubber extruding portion 5A preferably includes a screw-type rubber extruder with a screw shaft rotated by a motor M. The rubber attaching tool 5B preferably includes a pipe-like body 6 connected to the extruding port 5A2 of the rubber extruding portion 5A.

The pipe-like body 6 preferably includes a hollow topping chamber 6C therein. A distal end 6A of the pipe-like body 6 may be closed and a posterior end 6B of the pipe-like body 6 may include an opening which may communicate with the extruding port 5A2. If the posterior end 6B of the pipe-like body 6 is fixed to the rubber extruding portion 5A, using a flange for example, first topping rubber may supply the topping chamber 6C of the pipe-like body 6 under a predetermined pressure. The pipe-like body 6 may be longitudinally split into two pieces for facilitating maintenance of the topping chamber 6C.

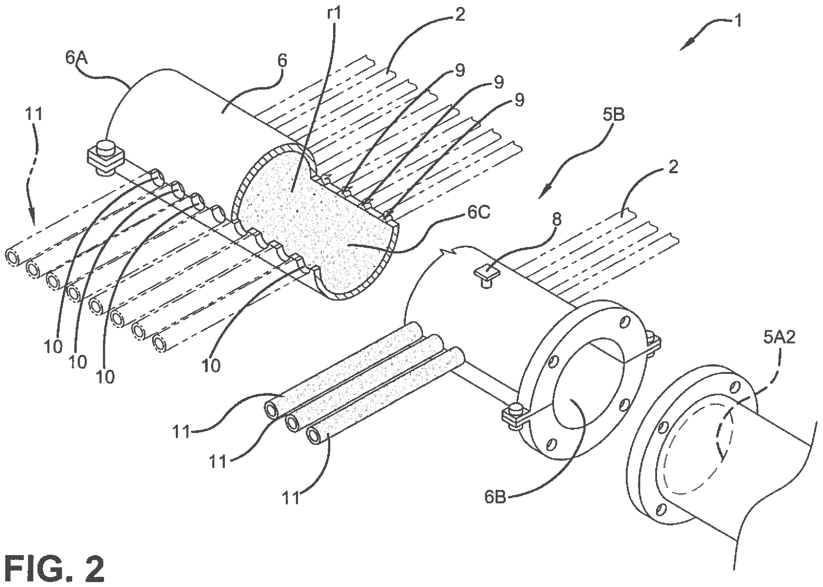

As shown in FIG. 2, the pipe-like body 6 preferably includes a plurality of first guiding holes 9 at its upstream wall surface through which the cords 2 may pass. The first holes 9 are formed at distances from one another in a longitudinal direction of the pipe-like body 6. The base body 6 preferably also includes second coating holes 10 at its downstream wall surface corresponding to the first holes 9. The second holes 10 are preferably concentric with the first holes 9 and have a diameter greater than a diameter of the first holes 9. The rubber attaching tool 5B preferably further includes a pressure sensor 8 for detecting pressure in the topping chamber 6C. A signal from the pressure sensor 8 may be transmitted to a control apparatus (not shown) of the rubber extruding portion 5A. A rubber amount for supplying the rubber extruding portion 5A may thereby automatically control the rubber pressure of the topping chamber 6C and maintain the pressure at a predetermined optimal value.

The cords 2, arranged in parallel to one another by the roll 4, thus pass through the topping chamber 6C from the first holes 9 of the pipe-like body 6 to the second holes 10. The cords 2 may be pulled out straightly such that the cords 2 align with respect to a coincident center of each of the first holes 9 and second holes 10. In the topping chamber 6C, first topping rubber r1 supplied under the predetermined rubber pressure permeate/fill in a gap between the cords 2 and attach to a periphery of the cords. In the second hole 10, the first topping rubber r1 attached to the cords 2 is sliced off except a thin coating layer 11 concentrically attached to periphery of the cords.

Since the cords 2 pass through the high pressure first topping rubber r1, even if the passing speed is fast, the first topping rubber r1 sufficiently and effectively permeate the fine gap between the cords 2. As stated above, the pressure in the topping chamber 6C may be controlled in a desired range by the pressure sensor 8. Therefore, the attaching efficiency of the first topping rubber r1 to the cords 2 may be achieved.

The pressure in the topping chamber 6C is preferably 5,000 kPa, 10,000 kPa, or higher. If the pressure in the topping chamber 6C is less than 5,000 kPa, the attaching or permeating effect of first topping rubber r1 with respect to the cords 2 may be less than acceptable. If the pressure is excessively high, the first topping rubber r1 may flow out undesirably from the first and second holes 9, 10. Also, resistance caused when the cords 2 pass through the first topping rubber r1 may become greater and the productivity deteriorated. The speed of the cords 2 is preferably in a range of 5 to 30 m/min or in a range of 10 to 30 m/min.

The diameter of the first holes 9 is preferably in a range of 101% to 107% of the outer diameter of the cords 2, or in a range of 103% to 105% thereof.

If the diameter of the first holes 9 is less than 101% of the outer diameter of the cords 2, the cords may be damaged. If the diameter exceeds 107%, centering of the cords 2 may become problematic and an amount of topping rubber flowing out from the gap between the cords may become excessive.

The diameter of the second holes 10 is preferably in a range of 102% to 110% of the outer diameter of the cords, or in a range of 103% to 105% thereof.

If the diameter of the second holes 10 is less than 102% of the outer diameter of the cords, the coating thickness of the first topping rubber r1 may become excessively small and may lead to peeling off of the first topping rubber. If the diameter exceeds 107%, the coating thickness may become excessively thick and undesirably increase the overall ply thickness. The coating thickness may be between 0.1 mm and 0.5 mm.

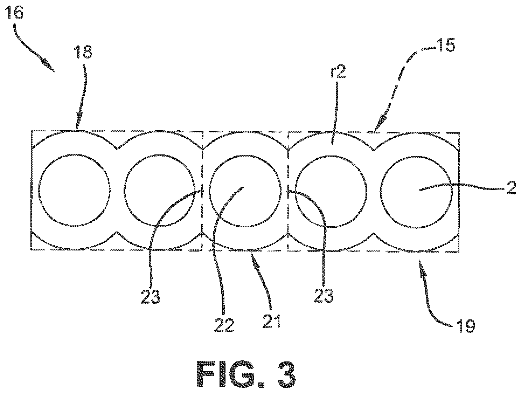

Next, a second topping step attaches a second topping rubber r2 to a surface of a cord array 12 in which the cords 2 and coating of first topping rubber r1 are arranged. Four calender rolls 13 may be used (FIG. 1). Both surfaces of the cord array 12 having rubber may be coated with second topping rubbers r2 and a sheet-like cord ply 15, such as that of FIG. 3, may be formed.

As shown in FIGS. 1 and 3 and in accordance with the present invention, a supplemental die 14 may be further included downstream of the calender rolls 13. The die 14 preferably includes a die plate for modifying the planar upper and lower surfaces of the sheet like ply 15 such that the throated ply 16 of FIG. 3 is achieved.

Preferably, the die 14 removes rubber r2 from the sheet-like ply 15 such that an upper surface 18 and a lower surface 19 of the throated ply 16 have cylindrical portions 21 with each of the cylindrical portions being partially concentric with a cylindrical outer surface of its adjacent cord 2. The joining of each cylindrical portion 21 with an adjacent cylindrical portion form a linear conjunction with each cylindrical portion being defined by a midpoint 23 between two cords on one side of a cord 22 and a midpoint 23 between two cords on the opposite side of the cord 22.

The design of the throated ply 16 allows it to create a volume neutral ply (compared to traditional sheet-like ply 15) with rubber on top and bottom of the cord 22 and a notch or throat between each cord 2.

This results in a more even strain distribution of rubber within the ply 16 during tire shaping, which may produce a more even cord spacing in the cured tire.

The upper and lower surfaces 18, 19 of the ply 16 in one example have an appearance similar to corduroy fabric (FIG. 3). Additionally, any geometry that creates a ply 16 with a varying gauge along the upper and lower surfaces 18, 19 may result in the even strain distribution described above.

Consequently, any example ply 16 with additional topping gauge placed immediately above and/or below each cord 22 and less gauge placed between the cords 22 may be such a geometry. Example geometries may further include saw-toothed, square-toothed, rectangular-toothed, non-concentric cylindrical, or any suitable repeating geometry that meets this description. Such a ply 16 may be used with any suitable tire, such as that disclosed in US 2002/0134482.

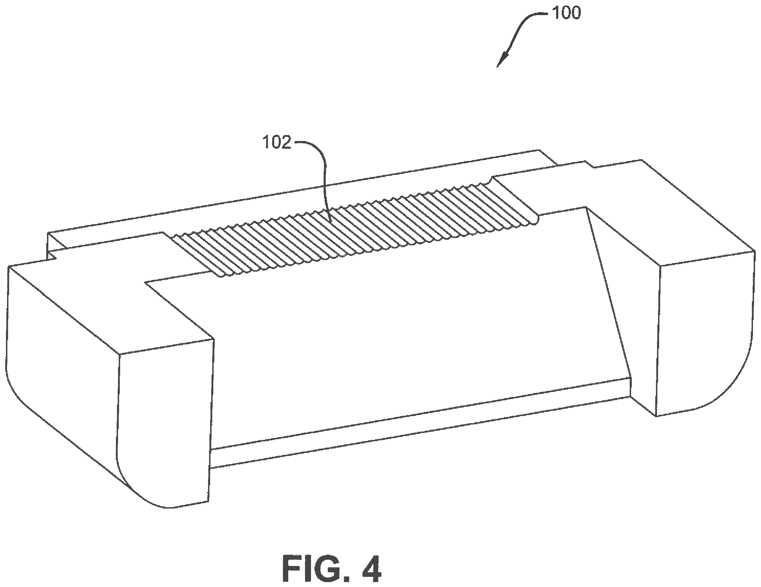

An example die 100 for a rubber mixing machine, in accordance with present invention, may produce the example ply 16 (FIG. 4). The example die 100 may work in concert with an extruder, calender, gear pump, and/or other suitable rubber/polymer mixing machine. As described above, the die 100 allows it to produce a ply, such as the example ply 16, having a plurality of cords 22 embedded in a polymer matrix (FIG. 3). The ply 16 preferably has a first radially upper, cylindrical surface 18 and a second radially lower, cylindrical surface 19 disposed opposite the first surface. Correspondingly, the die 100 preferably has cylindrical surfaces 102 (one shown) that define first cylindrical portions and second V-shaped portions interspaced between each first cylindrical portion (FIG. 4). Each cylindrical first portion of the ply 16 preferably has a thickness greater than each V-shaped second portion (at 23) thereby forming a ply with opposing V-shaped throated portions between each cord 22 of the plurality of cords 22 (FIG. 3).

## Claims

1. A cordurary or throated ply comprising an array (12) of parallel cords (2, 22) or filaments coated with a first topping ruber (r1), said ply (16) having a corduroy or throated first surface (18) and a corduroy or throated second surface (19) opposite the first corduroy or throated surface (18), **characterized in that** said array (12) of parallel cords (2, 22) or filaments coated with said first topping ruber (r1) has a coating of a second topping rubber (r2) on a surface where the array (12) and the coating of the first topping rubber (r1) are arranged.

2. A cordurary or throated ply of claim 1 wherein the second topping rubber (r2) is attached to a periphery of each of the parallel cords (2, 22) or filaments.

3. A tire component comprising the ply of claim 1 or claim 2.

4. A method for producing a corduroy or throated ply, the method comprises the steps of:
concentrically attaching a first topping rubber (r1) to a periphery of each of a plurality of cords (22) or filaments;
forming an array of cords (22) or filaments coated with the first topping rubber (r1); and
forming a ply (16) having a corduroy or throated first surface (18) and a corduroy or throated second surface (19) opposite the first corduroy or throated surface (18);
**characterized in that** the method further comprises concentrically attaching a second topping rubber (r2) to a periphery of each of the plurality of cords (22) or filaments.

5. A tire comprising a pair of axially spaced apart annular bead cores, a carcass ply extending around both bead cores, and a tread for engaging a contact surface, the tread being disposed radially outward of the carcass ply, wherein the tire comprises a ply (16) in accordance with claim 1 or 2.

6. The tire of claim 5 further comprising a belt structure disposed radially between the carcass ply and the tread.

7. The tire of claim 5 or 6 wherein said ply (16) is used as said carcass ply or as part of said carcass ply.

8. The tire of claim 5 wherein said ply (16) is used in said belt structure.

9. The tire of at least one of the claims 5 to 8 wherein the belt structure has a first radially upper belt surface and a second radially lower belt surface disposed opposite the first belt surface, and wherein (i) the first belt surface has first, at least partially cylindrical belt portions with each of the first belt portions being at least partially concentric with a cylindrical outer surface of an adjacent belt cord (22); and/or wherein (ii) the first belt surface has a corduroy appearance.

## Patentansprüche

1. Cord- oder Kehllage, die eine Anordnung (12) aus parallelen Korden (2, 22) oder aus mit einem ersten Gummibelag (r1) beschichteten Filamenten umfasst, wobei die Lage (16) eine erste Cord- oder Kehloberfläche (18) und eine zweite Cord- oder Kehloberfläche (18) gegenüber der ersten Cord- oder Kehloberfläche (19) hat, **dadurch gekennzeichnet, dass** die Anordnung aus parallelen Korden (2, 22) oder aus mit einem ersten Gummibelag (r1) beschichteten Filamenten eine Beschichtung eines zweiten Gummibelags (r2) auf einer Oberfläche hat, auf der die Anordnung (12) und die Beschichtung des ersten Gummibelags (r1) angeordnet sind.

2. Cord- oder Kehllage nach Anspruch 1, wobei der zweite Gummibelag (r2) an einem Umfang der parallelen Korde (2, 22) oder Filamente befestigt ist.

3. Reifenkomponente, die die Lage nach Anspruch 1 oder 2 umfasst.

4. Verfahren zur Herstellung einer Cord- oder Kehllage, wobei das Verfahren folgende Schritte umfasst:
das konzentrische Befestigen eines ersten Gummibelags (r1) an einem Umfang von jedem von mehreren Korden (22) oder Fäden;
das Bilden von einer Anordnung von Korden (22) oder Filamenten, die mit dem ersten Gummibelag (r1) beschichtet sind; und
das Bilden einer Lage (16), die eine Cord- oder Kehloberfläche (18) und eine der ersten Cord- oder Kehloberfläche (18) gegenüberliegenden Cord- oder Kehloberfläche (19);
**dadurch gekennzeichnet, dass** das Verfahren ferner das konzentrische Befestigen eines zweiten Gummibelags (r2) an einem Umfang von jedem von mehreren Korden (22) oder Fäden.

5. Reifen, der ein Paar axial beanstandeter ringförmiger Wulstkerne, eine sich um beide Wulstkerne erstreckende Karkassenlage und eine Lauffläche zum Eingriff in eine Kontaktfläche umfasst, wobei die Lauffläche radial nach außen der Karkassenlage angeordnet ist, wobei der Reifen eine Lage (16) gemäß Anspruch 1 oder 2 umfasst.

6. Reifen nach Anspruch 5, der ferner eine Gürtelstruktur umfasst, die radial zwischen der Karkassenlage und der Lauffläche angeordnet ist.

7. Reifen nach Anspruch 5 oder 6, wobei die Lage (16) als Karkassenlage oder als Teil der Karkassenlage verwendet wird.

8. Reifen nach Anspruch 5, wobei die Lage (16) in der Gürtelstruktur verwendet wird.

9. Reifen nach mindestens einem der Ansprüche 5 bis 8, wobei die Gürtelstruktur eine erste radial obere Gürteloberfläche und eine zweite radial untere Gürteloberfläche aufweist, die gegenüber der ersten Gürteloberfläche angeordnet ist, und wobei (i) die erste Gürteloberfläche erste, mindestens teilweise zylindrische Gürtelabschnitte, wobei jeder der ersten Gürtelabschnitte mindestens teilweise konzentrisch mit einer zylindrischen Außenfläche eines benachbarten Gürtelkordes (22) ist; und/oder wobei (ii) die erste Gürteloberfläche ein Cordaussehen hat.

## Revendications

1. Nappe ayant un aspect de velours côtelé ou prenant la forme d'une gorge qui comprend une série (12) de câblés parallèles (2, 22) ou de filaments revêtus d'un premier caoutchouc faisant office de garniture (r1), ladite nappe (16) possédant une première surface (18) ayant un aspect de velours côtelé ou prenant la forme d'une gorge et une deuxième surface (19) ayant un aspect de velours côtelé ou prenant la forme d'une gorge à l'opposé de la première surface (18) ayant un aspect de velours côtelé ou prenant la forme d'une gorge, **caractérisée en ce que** ladite série (12) de câblés parallèles (2, 22) revêtus dudit premier caoutchouc faisant office de garniture (r1) possède un revêtement d'un deuxième caoutchouc faisant office de garniture (r2) sur une surface sur laquelle sont disposés la série (12) et le revêtement du premier caoutchouc faisant office de garniture (r1).

2. Nappe en forme de velours côtelé ou en forme de gorge selon la revendication 1, dans laquelle le deuxième caoutchouc faisant office de garniture (r2) est fixé à une périphérie de chacun des câblés parallèles (2, 22) ou des filaments.

3. Composant de bandage pneumatique qui comprend la nappe selon la revendication 1 ou 2.

4. Procédé pour la production d'une nappe ayant un aspect de velours côtelé ou prenant la forme d'une gorge, le procédé comprenant les étapes dans lesquelles :
on fixe en position concentrique un premier caoutchouc faisant office de garniture (r1) à une périphérie de chacun des câblés parallèles (2, 22) ou des filaments ;
on forme une série de câblés (22) ou de filaments qui sont enrobés avec le premier caoutchouc faisant office de garniture (r1) ; et
on forme une nappe (16) possédant une première surface (18) ayant un aspect de velours côtelé ou prenant la forme d'une gorge et une deuxième surface (19) ayant un aspect de velours côtelé ou prenant la forme d'une gorge à l'opposé de la première surface (18) ayant un aspect de velours côtelé ou prenant la forme d'une gorge ;
**caractérisé en ce que** le procédé comprend le fait de fixer un deuxième caoutchouc faisant office de garniture (r2) à une périphérie de chacun des câblés parallèles (22) ou des filaments.

5. Bandage pneumatique qui comprend une paire de tringles de talons annulaires espacées l'une de l'autre dans la direction axiale, une nappe de carcasse qui s'étend autour des deux tringles de talons, et une bande de roulement destinée à entrer en liaison avec une surface de contact, la bande de roulement étant disposée dans la direction radiale à l'extérieur de la nappe de carcasse, dans lequel le bandage pneumatique comprend une nappe (16) en conformité avec la revendication 1 ou 2.

6. Bandage pneumatique selon la revendication 5, qui comprend en outre une structure de ceinture qui est disposée dans la direction radiale entre la nappe de carcasse et la bande de roulement.

7. Bandage pneumatique selon la revendication 5 ou 6, dans lequel ladite nappe (16) est utilisée pour faire office de ladite nappe de carcasse ou pour faire office d'une partie de ladite nappe de carcasse.

8. Bandage pneumatique selon la revendication 5, dans lequel ladite nappe (16) est utilisée dans ladite structure de ceinture.

9. Bandage pneumatique selon au moins une des revendications 5 à 8, dans lequel la structure de ceinture possède une première surface de ceinture supérieure en direction radiale et une deuxième surface de ceinture inférieure en direction radiale qui est disposée à l'opposé de la première surface de ceinture, et dans lequel (i) la première surface de ceinture possède des premières portions de ceinture au moins en partie cylindrique, chacune des premières portions de ceinture étant au moins en partie concentrique avec une surface cylindrique externe d'un câblé de ceinture adjacent (22) ;
et/ou dans lequel (ii) la première surface de ceinture possède un aspect de velours côtelé
